# EUROPÄISCHE PATENTSCHRIFT

(11) **EP 1 762 427 B1**
(45) Veröffentlichungstag und Bekanntmachung des Hinweises auf die Patenterteilung: **02.09.2009**
(21) Anmeldenummer: 06018923.0
(22) Anmeldetag: 09.09.2006
(51) Int. Cl.: B60N 3/14

(54) **Beleuchtungseinheit für Zigarettenanzünderspannhülsen**
Lighting unit for receptacles of electric cigarette lighters
Unité d'éclairage pour réceptacle d'allume-cigare électrique

(30) Priorität: 13.09.2005 DE 102005043798; 12.10.2005 DE 102005048864
(43) Veröffentlichungstag der Anmeldung: 14.03.2007
(73) Patentinhaber: Casco Schoeller GmbH, 60437 Frankfurt am Main (DE)
(72) Erfinder: Baldauf, Albert, 63456 Hanau (DE); Schwarzbach, Ronald, 60439 Frankfurt (DE); Graeser, Norbert, 60529 Frankfurt (DE)
(74) Vertreter: Luderschmidt, Schüler & Partner

(56) Entgegenhaltungen:
- EP-A- 0 819 575
- EP-A- 1 516 777

## Beschreibung

Die vorliegende Erfindung betrifft einen elektrischen Zigarettenanzünder, insbesondere für Kraftfahrzeuge, mit einer Beleuchtungseinheit zur Ausleuchtung desselben, wobei unter einem Kraftfahrzeug sämtliche Land-, Wasser-, Luft-, Raum- und andere Fahrzeuge verstanden werden.

Herkömmliche elektrische Zigarettenanzünder, die in Kraftfahrzeugen, beispielsweise in PKW, verwendet werden, umfassen jeweils eine Glühlampe, die Bestandteil einer Beleuchtungseinheit ist. Beim Anlegen einer Gleichspannung an diese Beleuchtungseinheit - in einem PKW beträgt die Gleichspannung üblicherweise ca. 13,4V - wird mittels dieser Glühlampe ein auf eine Grundeinheit eines Zigarettenanzünders aufgeschobener Leuchtaufsatz aus lichtleitendem Material ausgeleuchtet, der wiederum dafür sorgt, dass ein im eingebauten Zustand des Zigarettenanzünders für einen Betrachter sichtbarer Bereich desselben ausgeleuchtet bzw. hinterleuchtet wird und den Zigarettenanzünder, insbesondere bei Dunkelheit, zu erkennen gibt.

Nachteilig an einer derartigen Beleuchtungseinheit ist, dass ihr ein komplexer Montageprozess zugrunde liegt, der oftmals Beschädigungen und Ausfälle derselben, beispielsweise durch Deformieren der Kontakte oder Beschädigen der Glühlampe, verursacht. Hinzu kommt neben der relativ kurzen Lebensdauer von Glühlampen auch deren Empfindlichkeit gegenüber mechanischen und elektrischen Einflüssen.

Bei der Entwicklung von Kraftfahrzeugen wird in zunehmendem Maß Wert auf ein homogenes Gesamterscheinungsbild hinsichtlich der Gestaltung der Hinterleuchtung von Anzeige- und Bedienelementen im Interieur gelegt. Anzeigeelemente, wie beispielsweise die Anzeigetafel bzw. das Kombiinstrument und dergleichen im Interieur eines PKWs, und Bedienelemente sollen in Farbe und Helligkeit aufeinander abgestimmt sein. Zumal mittlerweile in Kraftfahrzeugen neben Glühlampen bekanntlich auch Leuchtdioden (LEDs; light emitting diode) zur Hinterleuchtung des Interieurs verwendet werden, so zum Beispiel zur Hinterleuchtung des Kombiinstrumentes und dergleichen, und diese auch immer stärker Einzug in das Interieur von Kraftfahrzeugen halten, sind dieser Gestaltung des homogenen Gesamterscheinungsbildes der Hinterleuchtung des Interieurs Grenzen gesetzt, da Glühlampen und Leuchtdioden wegen ihres unterschiedlichen Abstrahlverhaltens für den Betrachter subjektiv unterschiedlich wirken.

In vielen Kraftfahrzeugen ist zudem die Hinterleuchtung der Anzeige- und der Bedienelemente bekanntlich dimmbar, so dass die Helligkeit der Hinterleuchtung individuell eingestellt werden kann. Im Gegensatz zu Leuchtdioden lassen sich aber Glühlampen schlecht dimmen, da Glühlampen unterhalb einer bestimmten kritischen Schwelle für die Bordnetzspannung (ca. 13,4V), bei etwa 6V, einfach ausgehen.

Aus der EP 0 819 575 A2 ist eine Beleuchtungseinrichtung für einen Zigarettenanzünder bekannt, die einen Leuchtring umfasst, der als Spannhülse zum Befestigen der Steckdose eines Zigarettenanzünders an einem Fahrzeugteil dient. Als Leuchtmittel für den Leuchtring dient eine Leuchtdiode, die in einem Gehäuse angeordnet ist. Der Leuchtring ist mit einer als Lichtleiter dienenden Lichtleitzunge zum Einkoppeln des von der Leuchtdiode ausgestrahlten Lichts in denselben versehen, in die das das Leuchtmittel der Beleuchtungseinrichtung aufnehmende Gehäuse materialeinheitlich integriert ist.

Nachteilig an dieser Beleuchtungseinrichtung ist, dass das vom Leuchtmittel ausgestrahlte Licht lediglich zur Ausleuchtung des Leuchtrings genutzt werden kann.

Die EP 1 516 777 A1 beschreibt einen Zigarettenanzünder, der eine Grundeinheit aufweist, die einen Heizeinsatz und einen Zündkörper umfasst. Auf die Grundeinheit ist ein Aufsatz aufgeschoben, der aus transparentem und nichtleitendem Material zur Ausleuchtung des Zigarettenanzünders besteht. Der Aufsatz wird von einer Beleuchtungseinheit beleuchtet. Die Beleuchtungseinheit weist eine einteilige Aufnahmeeinheit auf, in die eine Leiterplatte eingeschoben wird. Die Leiterplatte 9 ist auf der Rückseite mit einer Leuchtdiode bestückt, die dem Aufsatz aus transparentem und lichtleitendem Material zugewandt ist. Das Licht der Leuchtdiode tritt durch eine Ausnehmung der Aufnahmeeinheit und trifft auf den Aufsatz aus transparentem und lichtleitendem Material.

Der Erfindung liegt deshalb die Aufgabe zugrunde, einen Zigarettenanzünder mit einer Beleuchtung bereitzustellen, die einfach montierbar ist und keine montagebedingten Ausfälle verursacht.

Der Erfindung liegt auch die Aufgabe zugrunde, einen Zigarettenanzünder mit einer Beleuchtung bereitzustellen, die eine gleichmäßige Ausleuchtung des Zigarettenanzünders und / oder eines Aschenbechers ermöglicht.

Außerdem liegt der Erfindung die Aufgabe zugrunde, einen Zigarettenanzünder mit einer Beleuchtung bereitzustellen, die zur Gestaltung eines einheitlichen Gesamterscheinungsbildes der Hinterleuchtung der Anzeige- und Bedienelemente im Interieur eines Kraftfahrzeuges beiträgt.

Die Lösung dieser Aufgaben erfolgt erfindungsgemäß mit den im Patentanspruch 1 angegebenen Merkmalen. Bevorzugte Ausführungsformen der Erfindung sind Gegenstand der Unteransprüche.

Der erfindungsgemäße Zigarettenanzünder umfasst eine Grundeinheit bestehend aus einem im Wesentlichen zylindrischen Heizeinsatz und einem im Wesentlichen hülsenförmigen Zündkörper zur Aufnahme des Heizeinsatzes, einen auf die Grundeinheit aufgeschobenen, im Wesentlichen ringförmigen Aufsatz aus transparentem und lichtleitendem Material zur Ausleuchtung eines im eingebauten Zustand des Zigarettenanzünders für einen Betrachter sichtbaren Bereiches desselben, der eine Lichteintrittsöffnung zur Einkopplung von Licht in den Aufsatz zur Ausleuchtung desselben aufweist, und eine am Aufsatz befestigte Beleuchtungseinheit mit einer Aufnahmeeinheit zur Aufnahme eines passgenau einsetzbaren Beleuchtungseinsatzes, wobei der Beleuchtungseinsatz als Leiterplatte ausgebildet ist und mindestens ein Leuchtmittel aufweist.

Erfindungsgemäß ist die Aufnahmeeinheit mit mindestens einer als Lichtaustrittsöffnung dienenden Ausnehmung zur Auskopplung des vom mindestens einen Leuchtmittel abgestrahlten Lichts versehen, um einen Aschenbecher ausleuchten zu können. Der Beleuchtungseinsatz ist in der Aufnahmeeinheit zwischen der Lichteintrittsöffnung des Aufsatzes und der Lichtaustrittsöffnung der Aufnahmeeinheit angeordnet, wobei das mindestens eine Leuchtmittel der Lichteintrittsöffnung des Aufsatzes und / oder der Lichtaustrittsöffnung der Aufnahmeeinheit zugewandt ist.

Die Aufnahmeeinheit umfasst einen ersten Gehäuseteil zur Aufnahme der Leiterplatte und einen als Gehäusedeckel dienenden zweiten Gehäuseteil. Dabei ist der zweite Gehäuseteil auf seiner in der Gebrauchslage oberen Seite mit der mindestens einen als Lichtaustrittsöffnung dienenden Ausnehmung zur Auskopplung des von dem mindestens einen Leuchtmittel abgestrahlten Lichts zwecks Ausleuchtung des Aschenbechers versehen.

Der erfindungsgemäße Zigarettenanzünder zeichnet sich durch seine einfache Montierbarkeit aus, so dass die eingangs beschriebenen, montagebedingten Ausfälle der Beleuchtung herkömmlicher Zigarettenanzünder unterbunden werden.

Der entscheidende Vorteil des erfindungsgemäßen Zigarettenanzünders liegt aber darin, dass die Aufnahmeeinheit der Beleuchtungseinheit die Bestückung mit Beleuchtungseinsätzen unterschiedlicher Ausbildung ermöglicht, wobei die einzelnen Beleuchtungseinsätze in Abhängigkeit von dem jeweiligen Anwendungsfall über eine unterschiedliche Konfiguration von Leuchtmitteln verfügen können.

Dadurch dass das mindestens eine Leuchtmittel der Lichteintrittsöffnung des Aufsatzes und/oder der Lichtaustrittsöffnung der Aufnahmeeinheit zugewandt ist, erlaubt der erfindungsgemäße Zigarettenanzünder wahlweise entweder die Ausleuchtung nur des Zigarettenanzünders, nur des Aschenbechers oder sowohl des Zigarettenanzünders als auch des Aschenbechers.

Die mindestens eine Lichtaustrittsöffnung in der Aufnahmeeinheit hat den Vorteil, das der Aschenbecher nicht nur mit dem Restlicht des Zigarettenanzünders, sondern unabhängig davon selbst mit dem mindestens einen Leuchtmittel ausgeleuchtet werden kann. Mittels eines nahe des mindestens einen Leuchtmittels angeordneten Lichtleiters kann das von diesem abgestrahlte Licht zum Aschenbecher geleitet werden, der in der Nähe des Zigarettenanzünders angeordnet ist.

Bei einer bevorzugten Ausführungsform der Erfindung ist die Aufnahmeeinheit der Beleuchtungseinheit vorzugsweise einschnappend bzw. einrastend am Aufsatz des erfindungsgemäßen Zigarettenanzünders befestigt. Hierzu ist die Aufnahmeeinheit zweckmäßigerweise mit Rastlippen versehen, die vorzugsweise dafür vorgesehene Ansätze eines Befestigungsstückes des Aufsatzes einschnappend bzw. einrastend hintergreifen. Vorteilhafterweise umfasst die Aufnahmeeinheit der Beleuchtungseinheit zudem mindestens eine Lippe, die in mindestens einen dafür vorgesehenen Schlitz des Aufsatzes eingreift, um die Aufnahmeeinheit gegenüber dem Aufsatz des erfindungsgemäßen Zigarettenanzünders zu arretieren. Grundsätzlich kann die Aufnahmeeinheit auch mit dem Aufsatz verspannt oder verklebt werden. Alternativ sind der Aufsatz und die Aufnahmeeinheit auch als eine einteilig ausgebildete Einheit denkbar.

Vorzugsweise ist die Aufnahmeeinheit einteilig ausgebildet. Dabei ist der zweite Gehäuseteil zweckmäßigerweise mittels eines als Verschlussscharnier dienenden Filmgelenks drehbar am ersten Gehäuseteil befestigt.

Die Aufnahmeeinheit kann im Wesentlichen kastenförmig ausgebildet sein, wobei der erste Gehäuseteil der Aufnahmeeinheit vorzugsweise eine rechteckige Ausnehmung zur Aufnahme des Beleuchtungseinsatzes aufweist, der hierzu zweckmäßigerweise rechteckig ausgebildet ist.

Bei einer weiteren bevorzugten Ausführungsform der Erfindung ist der zweite Gehäuseteil der Aufnahmeeinheit mit Schließelementen zum Verschließen des ersten Gehäuseteils mit dem zweiten Gehäuseteil der Aufnahmeeinheit versehen. Vorzugsweise sind die Schließelemente des zweiten Gehäuseteils als rechteckige und / oder als gebogene Rastzungen bzw. Rastlippen (Snap-ins) ausgebildet, wobei die rechteckigen Rastzungen in dafür vorgesehene vorzugsweise rechteckige Ausnehmungen des ersten Gehäuseteils einrasten und die gebogenen Rastzungen dafür vorgesehene Ansätze des ersten Gehäuseteils hintergreifen. Grundsätzlich können die Ausnehmungen des ersten Gehäuseteils und die Rastzungen bzw. Rastlippen des zweiten Gehäuseteils auch andere Formen aufweisen.

Sowohl der Aufsatz als auch die Aufnahmeeinheit des erfindungsgemäßen Zigarettenanzünders sind vorzugsweise als Kunststoffspritzgussteile ausgebildet.

Bei einer weiteren besonders bevorzugten Ausführungsform der Erfindung ist das mindestens eine Leuchtmittel eine Leuchtdiode (LED).

Vorteilhaft an der Verwendung der Leuchtdiode als Leuchtmittel ist, dass im Vergleich zu herkömmlichen mit einer Glühlampe ausgeleuchteten Zigarettenanzündern eine gleichmäßige Ausleuchtung des im eingebauten Zustand des Zigarettenanzünders für den Betrachter sichtbaren Bereiches desselben und / oder des Aschenbechers ermöglicht wird. Diese gleichmäßige Ausleuchtung des erfindungsgemäßen Zigarettenanzünders und / oder des Aschenbechers in Verbindung mit der guten Dimmbarkeit der Leuchtdiode (LED) als Leuchtmittel, die auch unterhalb der für Glühlampen herkömmlicher Zigarettenanzünder kritischen Schwelle für die Bordnetzspannung von ca. 6V zur Hinterleuchtung der Anzeige- und der Bedienelemente weiterhin dimmbar ist, trägt vorteilhafterweise zur Gestaltung des einheitlichen Gesamterscheinungsbildes der Hinterleuchtung und zugleich zu einer ergonomischen und funktionellen Hinterleuchtung der Anzeige- und Bedienelemente im Interieur des Fahrzeuges bei.

Eine weitere vorteilhafte der Leuchtdiode zugrunde liegende Eigenschaft ist die im Vergleich zur Glühlampe wesentlich längere Lebensdauer. Dementsprechend sind auch die Auswechslungsinterwalle der Leuchtdiode gegenüber der Glühlampe deutlich länger.

Im folgenden wird ein Ausführungsbeispiel der Erfindung unter Bezugnahme auf Zeichnungen näher erläutert. Es zeigen:
- Figur 1: einen erfindungsgemäßen Zigarettenanzünder in einer perspektivischen Ansicht bzw. einer Teilexplosionsdarstellung,
- Figur 2: den erfindungsgemäßen Zigarettenanzünder aus Figur 1 in einer Explosionsdarstellung,
- Figur 3: eine Beleuchtungseinheit des erfindungsgemäßen Zigarettenanzünders in einer Explosionsdarstellung, und
- Figur 4: eine weitere Explosionsdarstellung der Beleuchtungseinheit aus Figur 3.

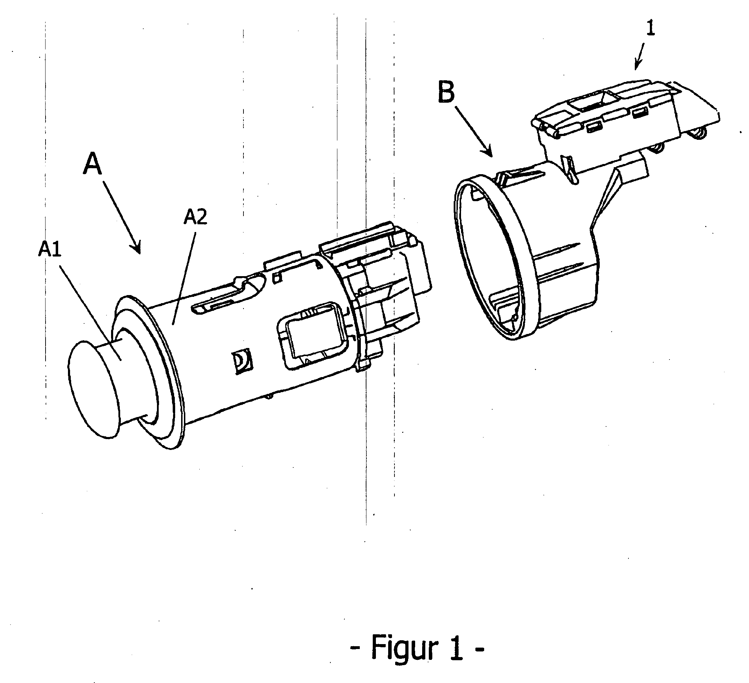

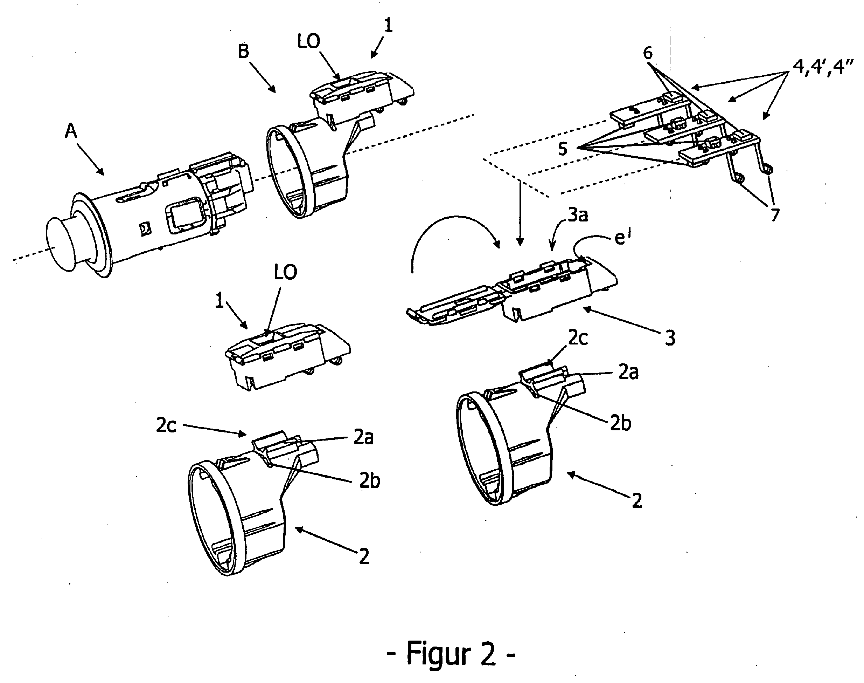

Der in Figur 1 und 2 abgebildete erfindungsgemäße Zigarettenanzünder dient der Verwendung in einem Kraftfahrzeug der zu Beginn im einleitenden Teil der Beschreibung definierten Art.

Der erfindungsgemäße Zigarettenanzünder besteht aus einer Grundeinheit A, einem im Wesentlichen ringförmigen Aufsatz B aus transparentem und lichtleidendem Material, der auf die Grundeinheit A aufgeschoben ist, und einer Beleuchtungseinheit 1, die am Aufsatz B befestigt ist.

Die Grundeinheit A besteht aus einem im Wesentlichen zylindrischen Heizeinsatz A1 und einem im Wesentlichen hülsenförmigen Zündkörper A2 zur Aufnahme des Heizeinsatzes A1. Der Zigarettenanzünder als solcher ist dem Fachmann aus dem Stand der Technik bekannt. Deshalb wird an dieser Stelle von einer detaillierten Beschreibung der in Figur 1 und 2 abgebildeten Grundeinheit A des erfindungsgemäßen Zigarettenanzünders abgesehen.

Auf der Grundeinheit A des Zigarettenanzünders sitzt ein ringförmiger Aufsatz B aus transparentem lichtleitendem Material zur Ausleuchtung eines im eingebauten Zustand eines Zigarettenanzünders für einen Betrachter sichtbaren Bereiches desselben. Wenn an dem rückwärtigen Ende des Aufsatzes B Licht eingekoppelt wird, tritt das Licht an der Stirnfläche des Aufsatzes aus, so dass der Knopf des Zigarettenanzünders von einem leuchtenden Ring umschlossen wird.

Die Beleuchtungseinheit 1 besteht ihrerseits aus einer einteilig und im Wesentlichen kastenförmig ausgebildeten Aufnahmeeinheit 3, die einen ersten Gehäuseteil c und einen als Gehäusedeckel dienenden zweiten Gehäuseteil b aufweist, und einem Beleuchtungseinsatz.

Sowohl der Aufsatz B als auch die Aufnahmeeinheit 3 des erfindungsgemäßen Zigarettenanzünders sind als Kunststoffspritzgussteile ausgebildet. Im Gegensatz zum Aufsatz B muss die Aufnahmeeinheit 3 allerdings nicht aus transparentem und lichtleitendem Material ausgebildet sein. Für den Fall einer im Aufsatz B integrierten Aufnahmeeinheit 3, also einer einteiligen Ausbildung bestehend aus dem Aufsatz B und der Aufnahmeeinheit 3, kann der Einfachheit halber der verwendete Kunststoffspritzgusswerkstoff insgesamt transparent und lichtleidend sein.

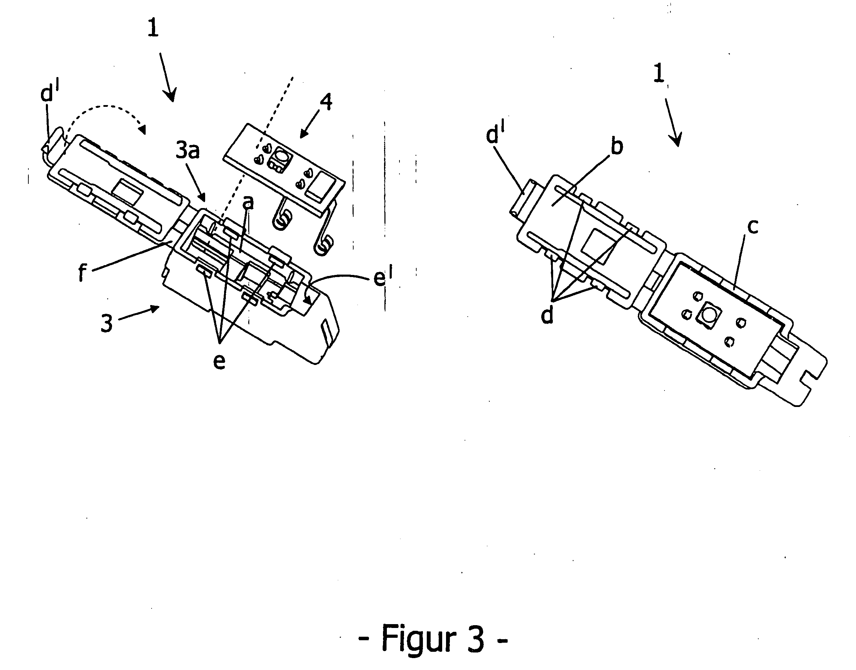

In eine im Wesentlichen rechteckige Ausnehmung 3a des ersten Gehäuseteils c ist der Beleuchtungseinsatz, der als eine mit mindestens einer Leuchtdiode (LED) 5 als Leuchtmittel bestückte, rechteckige Leiterplatte 4 ausgebildet ist, passgenau eingesetzt und mittels des zweiten Gehäuseteils b fixiert. Dabei liegt die Leiterplatte 4 in der Ausnehmung 3a im Wesentlichen auf einer entlang der beiden Längsseiten des ersten Gehäuseteils c ausgebildeten und von diesen nach innen vorspringenden Auflagefläche a auf (Figur 3). Der zweite Gehäuseteil b ist, da einteilig mit dem ersten Gehäuseteil c ausgebildet, mittels eines als Verschlussscharnier dienenden Filmgelenks f drehbar am ersten Gehäuseteil c befestigt. Zur Fixierung des Beleuchtungseinsatzes ist der zweite Gehäuseteil b mit als Rastzungen d, d^{|} ausgebildeten Schließelementen versehen, mittels derer der erste Gehäuseteil c mit dem zweiten Gehäuseteil b verschlossen wird und dabei den Beleuchtungseinsatz im ersten Gehäuseteil c fixiert (Figur 3). An seinen Längsseiten weist der zweite Gehäuseteil b jeweils zwei rechteckige Rastzungen d und an einer dem Filmgelenk f gegenüberliegenden Seite eine gebogene Rastzunge d^{|} auf, wobei beim Verschließen des ersten Gehäuseteils c mit dem zweiten Gehäuseteil b die insgesamt vier recheckigen Rastzungen d in dafür vorgesehene rechteckige Ausnehmungen e an den Längsseiten des ersten Gehäuseteils c einschnappen bzw. einrasten, und die Rastzunge d^{|} einen dafür vorgesehenen Ansatz e an einer dem Filmgelenk f gegenüberliegenden Seite des ersten Gehäuseteils c hintergreift.
Der Beleuchtungseinheit 1 des erfindungsgemäßen Zigarettenanzünders liegt ein modularer Aufbau zugrunde, so dass Leiterplatten 4, 4', 4" unterschiedlicher Ausbildung in die Aufnahmeeinheit eingesetzt werden können.

Fig. 2 zeigt in der rechten oberen Bildhälfte die unterschiedlichen Leiterplatten 4, 4', 4", mit denen die Aufnahmeeinheit bestückt werden kann. Neben einem Widerstand 6 und Kontakten 7, die sich von der in der Gebrauchslage der Leiterplatte 4 unteren Seite weg erstrecken, weisen die Leiterplatten 4, 4', 4" entweder eine oder zwei Leuchtdioden (LEDs) 5 auf. Die Kontakte 7 sind an ihren freien Enden als Kontaktfahnen ausgebildet, so dass sie in der arretierten Position der Leiterplatte 4 in der Ausnehmung 3a an entsprechenden Kontakten der Grundeinheit A, die an einem Bordnetz angeschlossen sind, anliegen und gegenüber diesen federnd vorgespannt sind.

Bei einer ersten Ausführungsform der Erfindung ist die Leiterplatte 4 mit einer auf ihrer in der Gebrauchslage unteren Seite angeordneten Leuchtdiode (LED) 5 bestückt (obere Leiterplatte 4 in Figur 2 oben rechts), die dem rückwärtigen Lichteintrittsende des Aufsatzes B gegenüberliegt, wenn die Leiterplatte in die Aufnahmeeinheit 3 der Beleuchtungseinheit 1 eingesetzt ist. Damit wird der Zigarettenanzünder ausgeleuchtet.

Bei einer alternativen Ausführungsform der Erfindung ist die Leiterplatte 4' mit einer auf ihrer in der Gebrauchslage oberen Seite angeordneten Leuchtdiode (LED) 5 bestückt (mittlere Leiterplatte 4 in Figur 2 oben rechts), die der Ausleuchtung eines Aschenbechers dient. Zu diesem Zweck ist der zweite Gehäuseteil b der Beleuchtungseinheit 1 mit einer als Lichtaustrittsöffnung dienenden Ausnehmung LO versehen, durch die das Licht der Leuchtdiode 5 hindurchstrahlt. Mittels eines hier nicht dargestellten Lichtleiters, der unmittelbar vor der Lichtaustrittsöffnung angeordnet ist, wird das von der Leuchtdiode 5 abgestrahlte Licht zu dem Aschenbecher geleitet.

Gemäß einer weiteren alternativen Ausführungsform der Erfindung ist die Leiterplatte 4" sowohl mit einer auf ihrer in der Gebrauchslage unteren Seite als auch mit einer auf ihrer in der Gebrauchslage oberen Seite angeordneten Leuchtdiode (LED) 5 bestückt (untere Leiterplatte 4 in Figur 2 oben rechts), die sowohl der Ausleuchtung des Aufsatzes B und somit dem im eingebauten Zustand des erfindungsgemäßen Zigarettenanzünders für den Betrachter sichtbaren Bereiches desselben als auch der Ausleuchtung des Aschenbechers dient.

Der Einsatz unterschiedlich bestückter Leiterplatten erlaubt darüber hinaus die Verwendung von Leuchtdioden mit unterschiedlichen Farben, ohne wesentliche Veränderungen an der gesamten Anordnung vornehmen zu müssen.

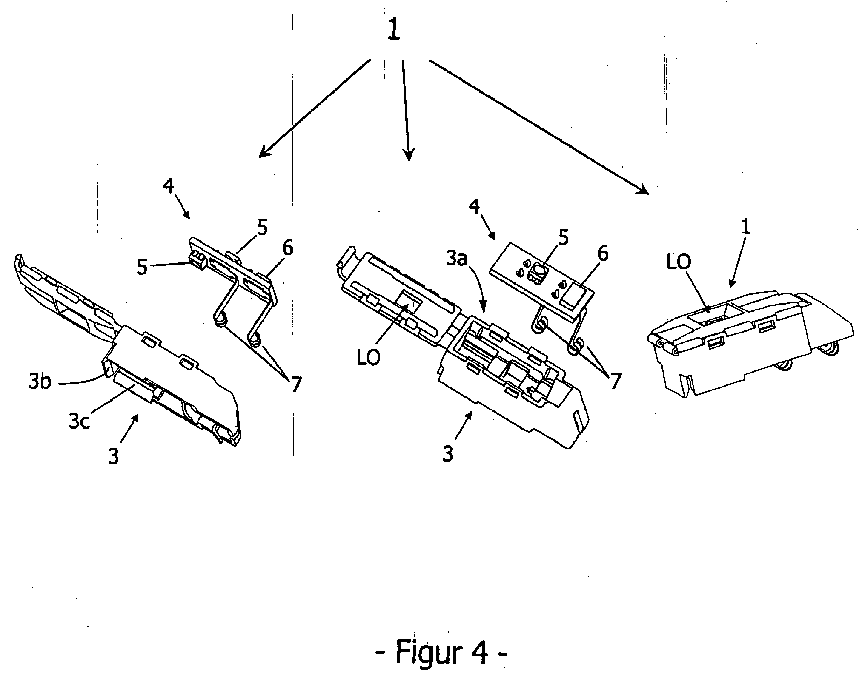

Nachfolgend wird die Befestigung der Beleuchtungseinheit 1 am Aufsatz B beschrieben. Die Aufnahmeeinheit 3 ist an ihrer in der Gebrauchslage unteren Seite mit einer Lippe 3b und zwei Rastlippen 3c (Figur 4) versehen. Im montierten Zustand der Beleuchtungseinheit 1 greift die Lippe 3b in einen dafür vorgesehenen Schlitz 2b im Aufsatz B ein, um ein axiales Verschieben der Beleuchtungseinheit 1 gegenüber dem Aufsatz B zu unterbinden, während die beiden Rastlippen 3c zwei dafür vorgesehene Ansätze 2a eines Befestigungsstückes 2c des Aufsatzes B einschnappend bzw. einrastend hintergreifen, so dass die Aufnahmeeinheit 3 einschnappend bzw. einrastend am Aufsatz B befestigt ist.

## Patentansprüche

1. Zigarettenanzünder mit
einer Grundeinheit (A) bestehend aus einem im Wesentlichen zylindrischen Heizeinsatz (A1) und einem im Wesentlichen hülsenförmigen Zündkörper (A2) zur Aufnahme des Heizeinsatzes (A1),
einem auf die Grundeinheit (A) aufgeschobenen, im Wesentlichen ringförmigen Aufsatz (B) aus transparentem und lichtleidendem Material zur Ausleuchtung eines im eingebauten Zustand des Zigarettenanzünders für einen Betrachter sichtbaren Bereiches desselben, der eine Lichteintrittsöffnung zur Einkopplung von Licht in den Aufsatz (B) zur Ausleuchtung desselben aufweist, und
einer am Aufsatz (B) befestigten Beleuchtungseinheit (1) mit einer Aufnahmeeinheit (3) zur Aufnahme einer passgenau einsetzbaren Leiterplatte (4), die mindestens ein Leuchtmittel aufweist,
**dadurch gekennzeichnet, dass** die Aufnahmeeinheit (3) einen ersten Gehäuseteil (c) zur Aufnahme der Leiterplatte (4) und einen als Gehäusedeckel dienenden zweiten Gehäuseteil (b) aufweist, der mit einer als Lichtaustrittsöffnung dienenden Ausnehmung (LO) versehen ist, wobei die Leiterplatte (4) in der Aufnahmeeinheit (3) zwischen der Lichteintrittsöffnung des Aufsatzes (B) und der Lichtaustrittsöffnung (LO) der Aufnahmeeinheit (3) angeordnet ist, und
dass die Leiterplatte (4) ein der Lichteintrittsöffnung des Aufsatzes (B) zugewandtes Leuchtmittel (5) und / oder ein der Lichtaustrittsöffnung (LO) der Aufnahmeeinheit (3) zugewandtes Leuchtmittel (5) aufweist.

2. Zigarettenanzünder nach Anspruch 1, **dadurch gekennzeichnet, dass** die Aufnahmeeinheit (3) mindestens eine Rastlippe (3c) aufweist, mit der die Aufnahmeeinheit (3) einschnappend am Aufsatz (B) befestigt ist.

3. Zigarettenanzünder nach Anspruch 1, **dadurch gekennzeichnet, dass** die Aufnahmeeinheit (3) mindestens eine Lippe (3b) aufweist, mit der die Aufnahmeeinheit (3) gegenüber dem Aufsatz (B) arretierbar ist.

4. Zigarettenanzünder nach einem der Ansprüche 1 bis 3, **dadurch gekennzeichnet, dass** die Aufnahmeeinheit (3) einteilig ausgebildet ist.

5. Zigarettenanzünder nach einem der Ansprüche 1 bis 4, **dadurch gekennzeichnet, dass** der zweite Gehäuseteil (b) mittels eines als Verschlussschamier dienenden Filmgelenks (f) drehbar am ersten Gehäuseteil (c) befestigt ist.

6. Zigarettenanzünder nach einem der Ansprüche 1 bis 5, **dadurch gekennzeichnet, dass** die Aufnahmeeinheit (3) eine rechteckige Ausnehmung (3a) zur Aufnahme der Leiterplatte (4) aufweist, wobei die Leiterplatte (4) rechteckig ausgebildet ist.

7. Zigarettenanzünder nach einem der Ansprüche 1 bis 6, **dadurch gekennzeichnet, dass** die Aufnahmeeinheit (3) im Wesentlichen kastenförmig ausgebildet ist.

8. Zigarettenanzünder nach einem der Ansprüche 1 bis 7, **dadurch gekennzeichnet, dass** der zweite Gehäuseteil (b) mit Schließelementen zum Verschließen des ersten Gehäuseteils (c) mit dem zweiten Gehäuseteil (b) versehen ist.

9. Zigarettenanzünder nach Anspruch 8, **dadurch gekennzeichnet, dass** die Schließelemente des zweiten Gehäuseteils (b) mindestens eine rechteckige Rastzunge (d) und / oder mindestens eine gebogene Rastzunge (d^{I}) aufweisen, wobei die rechteckige Rastzunge (d) in mindestens einen dafür vorgesehenen rechteckigen Ausbruch (e) des ersten Gehäuseteils (c) einrastet und die gebogene Rastzunge (d^{I}) mindestens einen dafür vorgesehenen Ansatz (e^{I}) des ersten Gehäuseteils (c) hintergreift.

10. Zigarettenanzünder nach einem der Ansprüche 1 bis 9, **dadurch gekennzeichnet, dass** sowohl der Aufsatz (B) als auch die Aufnahmeeinheit (3) als Kunststoffspritzgussteile ausgebildet sind.

11. Zigarettenanzünder nach einem der Ansprüche 1 bis 10, **dadurch gekennzeichnet, dass** das Leuchtmittel eine Leuchtdiode (LED) (5) ist.

## Claims

1. Cigar lighter having,
a main unit (A) comprising a substantially cylindrical heating unit (A1) and a socket (A2) of a substantially sleeve-like form to receive the heating unit (A1),
a substantially annular member for attachment (B), of transparent, light-conducting material, which is inserted onto the main unit (A), for illuminating a region of the cigar lighter which is visible to a viewer when the cigar lighter is in the installed state, which member for attachment (B) has an entry opening for light to couple light into the said member for attachment (B) in order to illuminate it,
and a lighting unit (1), fastened to the member for attachment (B), having a receiving unit (3) to receive a printed circuit board (4), which latter can be inserted as an exact fit and has at least one lighting means,
**characterised in that** the receiving unit (3) has a first housing part (c) to receive the printed circuit board (4) and a second housing part (b) which acts as a housing lid and which is provided with an aperture (LO) which acts as a light exit opening, the printed circuit board (4) being arranged in the receiving unit (3) between the entry opening for light of the member for attachment (B) and the light exit opening (LO) of the receiving unit,
and **in that** the printed circuit board (4) has a lighting means (5) facing towards the entry opening for light of the member for attachment (B) and/or a lighting means (5) facing towards the light exit opening (LO) of the receiving unit (3).

2. Cigar lighter according to claim 1, **characterised in that** the receiving unit (3) has at least one latching lip (3c) by which the receiving unit (3) is fastened to the member for attachment (B) by being snapped thereonto.

3. Cigar lighter according to claim 1, **characterised in that** the receiving unit (3) has at least one lip (3b) by which the receiving unit (3) can be locked relative to the member for attachment (B).

4. Cigar lighter according to one of claims 1 to 3, **characterised in that** the receiving unit (3) is formed in one piece.

5. Cigar lighter according to one of claims 1 to 4, **characterised in that** the second housing part (b) is fastened to the first housing part (c) in such a way as to be rotatable by means of a film joint (f) which acts as a hinge for closing.

6. Cigar lighter according to one of claims 1 to 5, **characterised in that** the receiving unit (3) has a rectangular opening (3a) to receive the printed-crcuit board (4), the printed circuit board (4) being of a rectangular form.

7. Cigar lighter according to one of claims 1 to 6, **characterised in that** the receiving unit (3) is of a substantially box-like form.

8. Cigar lighter according to one of claims 1 to 7, **characterised in that** the second housing part (b) is provided with locking members to lock the first housing part (c) to the second housing part (b).

9. Cigar lighter according to claim 8, **characterised in that** the locking members of the second housing part (b) have at least one rectangular latching tongue (d) and/or at least one curved latching tongue (d^{I}), the rectangular latching tongue (d) latching into at least one rectangular cut-out which is provided for the purpose in the first housing part (c) and the curved latching tongue (d^{I}) fitting behind at least one projection (e^{I}) which is provided for the purpose on the first housing part (c).

10. Cigar lighter according to one of claims 1 to 9, **characterised in that** both the member for attachment (B) and the receiving unit (3) are in form of injection mouldings of plastics material.

11. Cigar lighter according to one of claims 1 to 10, **characterised in that** the lighting means is a light-emitting diode (LED) (5).

## Revendications

1. Allume-cigare comprenant
une unité de base (A) constituée d'un insert de chauffage (A1) essentiellement cylindrique et d'un corps d'allumage (A2) essentiellement en forme de douille servant à recevoir l'insert de chauffage (A1),
une coiffe (B) essentiellement annulaire, placée sur l'unité de base (A), en matériau transparent et conducteur de lumière servant à éclairer, lorsque l'allume-cigare est à l'état monté, une de ses zones visible pour un observateur, qui présente une ouverture d'entrée de la lumière pour l'injection de lumière dans la coiffe (B) pour son éclairage, et
une unité d'éclairage (1) fixée à la coiffe (B) avec une unité de réception (3) pour la réception d'un circuit imprimé (4) insérable en ajustement précis, qui présente au moins un moyen d'éclairage,
**caractérisé en ce que** l'unité de réception (3) présente un premier élément de boîtier (c) servant à recevoir le circuit imprimé (4) et un deuxième élément de boîtier (b) servant de couvercle de boîtier, qui est doté d'un évidement (LO) servant d'ouverture de sortie de la lumière, le circuit imprimé (4) étant agencé dans l'unité de réception (3) entre l'ouverture d'entrée de la lumière de la coiffe (B) et l'ouverture de sortie de la lumière (LO) de l'unité de réception (3), et
**en ce que** le circuit imprimé (4) présente un moyen d'éclairage (5) tourné vers l'ouverture d'entrée de la lumière de la coiffe (B) et/ou un moyen d'éclairage (5) tourné vers l'ouverture de sortie de la lumière (LO) de l'unité de réception (3).

2. Allume-cigare selon la revendication 1, **caractérisé en ce que** l'unité de réception (3) présente au moins une lèvre d'encliquetage (3c), avec laquelle l'unité de réception (3) est fixée par encliquetage au niveau de la coiffe (B).

3. Allume-cigare selon la revendication 1, **caractérisé en ce que** l'unité de réception (3) présente au moins une lèvre (3b), avec laquelle l'unité de réception (3) peut être bloquée par rapport à la coiffe (B).

4. Allume-cigare selon l'une quelconque des revendications 1 à 3, **caractérisé en ce que** l'unité de réception (3) est réalisée d'une seule pièce.

5. Allume-cigare selon l'une quelconque des revendications 1 à 4, **caractérisé en ce que** le deuxième élément de boîtier (b) est fixé de manière rotative au premier élément de boîtier (c) à l'aide d'une articulation pelliculaire (f) servant de charnière de fermeture.

6. Allume-cigare selon l'une quelconque des revendications 1 à 5, **caractérisé en ce que** l'unité de réception (3) présente un évidement rectangulaire (3a) servant à recevoir le circuit imprimé (4), le circuit imprimé (4) étant réalisé de manière rectangulaire.

7. Allume-cigare selon l'une quelconque des revendications 1 à 6, **caractérisé en ce que** l'unité de réception (3) est réalisée essentiellement en forme de caisson.

8. Allume-cigare selon l'une quelconque des revendications 1 à 7, **caractérisé en ce que** le deuxième élément de boîtier (b) est doté d'éléments de fermeture servant à fermer le premier élément de boîtier (c) avec le deuxième élément de boîtier (b).

9. Allume-cigare selon la revendication 8, **caractérisé en ce que** les éléments de fermeture du deuxième élément de boîtier (b) présentent au moins une languette d'encliquetage rectangulaire (d) et/ou au moins une languette d'encliquetage incurvée (d'), la languette d'encliquetage rectangulaire (d) s'encliquetant dans au moins une découpe (e) rectangulaire prévue à cet effet du premier élément de boîtier (c) et la languette d'encliquetage incurvée (d') venant en prise derrière au moins un appendice (e') prévu à cet effet du premier élément de boîtier (c).

10. Allume-cigare selon l'une quelconque des revendications 1 à 9, **caractérisé en ce que** la coiffe (B) tout comme l'unité de réception (3) sont réalisées sous forme de pièces en plastique moulées par injection.

11. Allume-cigare selon l'une quelconque des revendications 1 à 10, **caractérisé en ce que** le moyen d'éclairage est une diode électroluminescente (DEL) (5).
